# EUROPEAN PATENT SPECIFICATION

(11) **EP 0 881 068 B1**
(45) Date of publication and mention of the grant of the patent: **12.02.2003**
(21) Application number: 98111961.3
(22) Date of filing: 18.12.1992
(51) Int. Cl.: B32B 27/32, B29C 55/02

(54) **Printable high barrier multilayer film**
Bedruckbare, undurchlässige Mehrschichtfolie
Film multicouche pouvant être imprimé et offrant une bonne résistance au passage de l'oxygène

(30) Priority: 20.12.1991 US 811126; 20.12.1991 US 811354
(43) Date of publication of application: 02.12.1998
(62) Divisional of application: 93901923.8
(73) Proprietor: EXXONMOBIL OIL CORPORATION, Fairfax, VA 22037 (US)
(72) Inventor: Knoerzer, Anthony Robert, Plano, Texas 75093 (US); Reid, Leland Wallace, Palmyra, New York 14522 (US)
(74) Representative: Samuels, Lucy Alice

(56) References cited:
- EP-A- 0 147 078
- US-A- 3 294 577

## Description

This invention relates to a multilayer packaging film having good barrier resistance to the transmission of oxygen and water vapor, good printability; and the ability to receive a firmly bonded metal layer thereon.

certain polymeric films e.g., polypropylene, employed for the packaging of foods, inherently permit the transmission of oxygen and water vapor from outside of the film to inside of a package made up of the film. Oxygen and water vapor permits rapid deterioration of foods packaged in containers made from such a film. Metal deposits on such films are desirable because of the improvement in appearance and in providing yet another layer which militates against the invasion of oxygen and water vapor.

Thus, it is a principal object of the present invention to present a film which has excellent printability, can have a metal layer firmly bonded thereto and which has significantly decreased oxygen and water vapor transmission rates.

The present invention relates to a process for forming a firmly bonded film laminate comprising:
(a) preparing an intimate blend of polypropylene and a maleic acid anhydride modified polypropylene and forming a cast layer thereof;
(b) forming said cast layer into a machine direction oriented film;
(c) applying a coating of poly(vinyl alcohol) containing cross-linking means to the machine direction oriented film;
(d) mating a second so-coated machine direction oriented film so that poly(vinyl alcohol) surfaces are in contact;
(e) transverse direction orienting the mated films to form a film laminate of high delamination resistance.

The invention is also concerned with a film combination, obtainable by the process above, comprising:
(a) a pair of films each comprised of an intimate blend of polypropylene and a maleic acid anhydride modified polypropylene;
(b) coatings of poly(vinyl alcohol) containing cross-linking means having been applied to a surface of each of said pair while said pair had been in a machine direction oriented condition; and
(c) each coated film having been positioned with the poly(vinyl alcohol) layers in intimate contacting relationship and said coated contacting films had then been transverse direction oriented.

The polypropylenes contemplated herein include homopolymers and copolymers of propylene. Particularly preferred are isotactic polypropylenes containing at least 80% by weight of isotactic polypropylene. The preferred base layer can be homopolypropylene having a melting point from 152 to 171°C (305 to 340°F), preferably from 161 to 169°C (321 to 336°F); an inherent viscosity from 1.4 to 4.0; an MFI (melt flow index) from 0.5 to 12; an MW (molecular weight) from 100,000 to 600,000; and a density from 0.89 to 0.91. Commercially available materials of this description include Exxon 4252 and ARCO W472 (registered trademarks).

According to a preferred embodiment of this invention the polypropylene blends comprise from 90 to 99 wt%, preferably from 92.5 to 98.5 wt%, of a polypropylene resin as described herein, compounded with from 1 to 10 wt%, preferably from 1.5 to 7.5 wt%, based on the weight of the polypropylene resin, of a maleated polypropylene.

The maleated polypropylene additive may be derived from maleic acid or its anhydride, copolymerized with polypropylene. Pertinent properties of maleated polypropylene marketed by Eastman Chemical are as follows:
Ring and Ball Softening 157°C;
MW 4500;
Density 0.934;
Acid Number 45;
Brookfield Visc. 190°C.cp/370
Color Gardner Scale 11;
Penetration Hardness, 100g/5 s/25°C
tenths of mm.0-1

In addition, the term maleic anhydride modified polypropylene homopolymer is the product resulting from the reaction between maleic anhydride and the thermal degradation product of polypropylene. Examples of this material can be found disclosed in US 3,480,580.

The polyvinyl alcohol employed herein can be any commercially available material. For example, ELVANOL 71-30, an E. I. DuPont product. The polyvinyl alcohol coating solution is prepared by dissolving the polymer in hot water, cooling and mixing both with a suitable cross-linking agent and an acid catalyst. The cross-linking agent can be a melamine- or urea-formaldehyde resin. Commercially available cross-linkers also would include PAREZ 613, a methylated melamine formaldehyde; CYMEL 373, a methylated melamine formaldehyde; CYMEL 401, a trimethylol melamine urea formaldehyde; glyoxal, borax, etc. An acid catalyst, e.g., ammonium sulfate, ammonium chloride, sulfuric acid, nitric acid and ammonium nitrate will effectively catalyze these systems.

Cross-linking is carried out to make the polyvinyl alcohol less moisture sensitive but it is essential that this does not occur before the coating weight is applied and evenly distributed. This is effected by making up the aqueous solution so that the initial concentration is too low for this to occur but, as drying occurs, the concentration increases and the rate of cross-linking is heightened.

Suitable concentrations have been found to be from 3 to 10, preferably from 4 to 8 wt% of the solution being polymer plus cross-linking agent plus catalyst. If the solids content is higher, the solution becomes too viscous; if lower, good water resistance is not obtained. From 10% to 30%, typically 15% cross-linking agent is used with from 0.5% to 4.5%, typically 2% of the acid catalyst. A preferred formulation comprises the following solids content: 85.5 wt% polyvinyl alcohol; 12.8 wt% methylated melamine formaldehyde; and 1.7 wt% ammonium chloride (NH₄Cl).

The aqueous polyvinyl alcohol solution was prepared by dissolving sufficient ELVANOL 71-30 in hot. water to form an 8 wt% solution which was then cooled. To this solution was added a 20 wt% aqueous melamine formaldehyde solution and a 5 wt% aqueous ammonium chloride solution to provide the preferred formulation recited above.

By cross-linking the underlying layer of polyvinyl alcohol, the moisture resistance of the polyvinyl alcohol is dramatically improved.

The following example illustrates the invention.

### EXAMPLE

An intimate blend of polypropylene (95 wt%) and maleated polypropylene (5 wt%) was prepared and formed into a cast layer of approximately 0.09cm (35 mls) thick. This cast layer was then machine direction oriented to a thickness of about 0.013cm (5 mls) thick. A coating of the above-identified poly(vinyl alcohol) was applied to one surface each of a pair of the machine direction oriented polypropylene films. The poly(vinyl alcohol) coating contained 2.5 phr (parts per hundred resin) of ammonium chloride and 20 phr of Parez 613 malemine formaldehyde. The so-coated substrate films were mated together so that the poly(vinyl alcohol) layers were in contact. This was accomplished by running the film through rollers at room temperature. The film travelled at approximately 15 m/min (50 fpm) and was subjected to a pressure of 620 kPa (90 psi). Thereafter the film combination was heated to 160°C and transverse direction oriented. The finished film had been machine direction oriented 7 times and transverse direction oriented 5 times.

The resulting laminated film strongly resisted delamination and was highly resistant to the transmission of oxygen and water vapour during a 24 h period.

It is to be understood that instead of bringing together 2 separately formed coated machine direction oriented films a single poly(vinyl alcohol) coated film can be folded on itself so that the poly(vinyl alcohol) faces are in contact and, after edge trimming, the film can be pressure laminated to itself, heated and transverse direction oriented before final windup for shipment to a converter.

## Claims

1. A process for forming a film laminate comprising:
(a) preparing an intimate blend of polypropylene and a maleic acid modified polypropylene and forming a cast layer thereof:
(b) forming said cast layer into a machine direction oriented film;
(c) applying a coating of poly(vinyl alcohol) containing cross-linking agent to the machine direction oriented film;
(d) mating a second so-coated machine direction oriented film so that poly(vinyl alcohol) surfaces are in contact;
(e) transverse direction orienting the mated films to form a delamination resistant film laminate.

2. A process according to claim 1 wherein the mating step (d) is carried out under a mating force of 207 to 896 kPa (30 to 130 psi).

3. A process according to claim 1 or claim 2 in which the machine direction orientation is from 2 to 7 times and the transverse direction orientation is from 3 to 8 times.

4. A film laminate obtainable by a process comprising:
(a) forming a pair of films, each film being formed by:
providing an intimate blend of polypropylene and a maleic acid modified polypropylene,
forming a cast layer thereof,
monoaxially orienting the layer in the machine direction,
applying to a surface of the monoaxially oriented layer a coating of poly(vinyl alcohol) containing a cross-linking agent,
and (b) positioning the pair of films with the poly(vinyl alcohol) layers in intimate contacting relationship, and orienting the contacting films in the transverse direction.

5. A film laminate according to claim 4 obtainable by a process in which the positioning is accompanied by a mating force of 207 to 896 kPa (30 to 130 psi).

6. A film laminate according to claim 4 or claim 5 obtainable by a process in which the orientation is from 2 to 7 times MD and from 3 to 8 times TD.

## Patentansprüche

1. Verfahren zur Herstellung eines Folienlaminats umfassend:
(a) die Vorbereitung einer innigen Mischung aus Polypropylen und einem maleinsäuremodifizierten Polypropylen und die Herstellung einer Gusschicht davon:
(b) das Formen der besagten Gusschicht in eine in Maschinenrichtung orientierte Folie;
(c) das Aufbringen einer Beschichtung aus Polyvinylalkohol, der ein Crosslinkingmittel enthält, auf die in Maschinenrichtung orientierten Folie;
(d) das Verbinden mit einer zweiten auf diese Weise beschichte und in Maschinenrichtung orientierte Folie, so dass die Polyvinylalkohol-oberflächen in Kontakt sind;
(e) die Orientierung der verbundenen Folien in Querrichtung, um ein delaminationsresistentes Folienlaminat zu bilden.

2. Verfahren nach Anspruch 1, worin der Verbindungschritt (d) unter einer Verbindungskraft von 207 bis 896 kPa (30 bis 130 psi) durchgeführt wird.

3. Verfahren nach Anspruch 1 oder 2, worin die Orientierung in Machinenrichtung um das 2 bis 7 fache und die Orientierung in Querrichtung um das 3 bis 8 fache ist.

4. Folienlaminat, das durch ein Verfahren erhalten werden kann, das umfasst:
(a) Bildung eines Folienpaares, wobei jede Folie hergestellt wird durch:
die Bereitstellung einer innigen Mischung aus Polypropylen und einem maleinsäuremodifizierten Polypropylen,
die Herstellung einer Gusschicht davon,
die monoaxiale Orientierung der Schicht in Maschinenrichtung,
das Aufbringen einer Beschichtung aus Polyvinylalkohol, der ein Crosslinkingmittel enthält, auf eine Oberfläche der monoaxialen Schicht,
und (b) die Positionierung der Folienpaare mit den Polyvinylaikoholschichten in einem innigen Kontaktverhältnis, und die Orientierung der kontaktierten Folien in Querrichtung.

5. Folienlaminat nach Anspruch 4, das durch ein Verfahren erhalten werden kann, bei welchem die Positionierung von einer Verbindungskraft von 207 bis 896 kPa (30 bis 130 psi) begleitet wird.

6. Folienlaminat nach Anspruch 4 oder Anspruch 5, das durch ein Verfahren erhalten werden kann, bei dem die Orientierung um das 2 bis 7 fache in Machinenrichtung und um das 3 bis 8 fache in Querrichtung ist.

## Revendications

1. Un procédé de fabrication d'un stratifié de film comprenant:
(a) la préparation d'un mélange intime de polypropylène et de polypropylène modifié par l'acide maléique et mise du mélange sous la forme d'une couche coulée;
(b) la formation de ladite couche coulée en un film orienté dans le sens machine;
(c) l'application d'un revêtement de poly(alcool vinylique) contenant un agent de réticulation, sur le film orienté dans le sens machine;
(d) appariement avec un second film orienté dans le sens machine ainsi revêtu de façon que les surfaces de poly(alcool vinylique) soient en contact;
(e) orientation dans le sens transverse des films appariés pour former un stratifié de film résistant à la déstratification.

2. Un procédé selon la revendication 1, dans lequel l'opération l'appariement (d) est effectuée sous une force d'appariement de 207 à 896 kPa (30 à 130 psi).

3. Un procédé selon l'une quelconque des revendications 1 ou 2, dans lequel l'orientation dans le sens machine est de 2 à 7 fois et l'orientation dans le sens transverse est de 3 à 8 fois.

4. Un stratifié de film susceptible d'être obtenu par un procédé contenant:
(a) la formation d'une paire de films, chaque film étant formé par:
utilisation d'un mélange intime de polypropylène et de polypropylène modifié par l'acide maléique,
formation d'une couche coulée à partir de ce mélange,
orientation monoaxiale de la couche dans le sens machine,
application sur la surface de la couche orientée monoaxialement d'un revêtement de poly(alcool vinylique) renfermant un agent de réticulation,
et (b) positionnement de la paire de films avec les couches de poly(alcool vinylique) en contact intime et orientation des films en contact dans le sens transverse.

5. Un stratifié de film selon la revendication 4 pouvant être obtenu par un procédé dans lequel le positionnement est accompagné par une force d'appariement de 207 à 896 kPa (30 à 130 psi).

6. Un stratifié de film selon la revendication 4 ou la revendication 5 pouvant être obtenu par un procédé dans lequel l'orientation est de 2 à 7 fois dans le sens machine et de 3 à 8 fois dans le sens transverse.
